(19) **Europäisches Patentamt**

**European Patent Office**

**Office européen des brevets**

(11) Veröffentlichungsnummer: **0 387 553**
**A1**

(12) **EUROPÄISCHE PATENTANMELDUNG**

(21) Anmeldenummer: **90103372.0**

(22) Anmeldetag: **22.02.90**

(51) Int. Cl.5: **B65C 9/16, F16H 35/02**

(30) Priorität: **16.03.89 DE 3908659**

(43) Veröffentlichungstag der Anmeldung:
**19.09.90 Patentblatt 90/38**

(84) Benannte Vertragsstaaten:
**DE ES FR GB IT**

(71) Anmelder: **ETI-TEC MASCHINENBAU GMBH**
**Feldheider Strasse 45**

**D-4006 Erkrath 2(DE)**

(72) Erfinder: **Buchholz, Rainer**
**Brinellstrasse 27**
**D-4000 Düsseldorf(DE)**
Erfinder: **Zodrow, Rudolf**
**Lichtstrasse 37**
**D-4000 Düsseldorf(DE)**

(54) **Etikettierstation für Gegenstände, insbesondere Flaschen.**

(57) Die Erfindung bezieht sich auf eine Etikettierstation für Gegenstände wie Flaschen. Das auf einem angetriebenen Träger 1 drehbar gelagerte Entnahmeelement wird von einem Kurvengetriebe angetrieben, das aus einer ortsfesten Doppelkurvenscheibe 23 mit zwei übereinander angeordneten einseitigen Kurven 23a,23b und aus zwei Sätzen von Eingriffsgliedern 18a,18b,19a,19b,21a,21b,22a,22b besteht, die auf der Antriebswelle 6 oder einer mit ihr gekuppelten Lagerwelle 18 mittels eines Trägerelementes 17 gelagert sind und durch Formschluß mit den beiden Kurven 23a,23b bei Drehung des Trägers 1 den Zwangslauf eines jeden Entnahmeelementes über seine volle Umdrehung sichern. Zum Zwecke eines einfachen und kompakten Aufbaus der Etikettierstattion ist vorgesehen, daß die Antriebs- bzw. Lagerwelle 18 vor der Ebene, in der die dieser Welle 18 näherliegende erste Kurve 23a liegt, endet, und daß die Eingriffsglieder 21a,21b,22a,22b, die der anderen zweiten Kurve 23b zugeordnet sind, an einem außerhalb der genannten Ebene liegenden Brückenglied 20 gelagert sind, das von am Trägerelement 17 gehaltenen Distanzelementen 18a,19a getragen ist, die außerhalb des von der ersten Kurve 23a überstrichenen Bereichs 26 liegen. Vorzugsweise werden die Distanzelemente 18a,19a von den Eingriffsgliedern gebildet. Wegen des wellenlosen mittigen Raums 26 zwischen den Eingriffsgliedern 18a,18b,19a,19b im Bereich der ersten Kurve 23a kann auch die Kurve 23a voll ausgebildet sein und bis in diesen freien Raum hineinreichen.

Fig.3

## Etikettierstation für Gegenstände, insbesondere Flaschen

Die Erfindung bezieht sich auf eine Etikettierstation für Gegenstände, insbesondere mit mehreren längs einer Bahn hintereinander angeordneten Stationen, und zwar einer Beleimungsvorrichtung, einer Etikettenvorratsstation und einer Etikettenübertragungsstation, sowie mit mindestens einem auf einem sich drehenden Träger drehbar gelagerten und bei jeder Umdrehung des Trägers an den Stationen vorbeibewegten Entnahmeelement für die Etiketten, das jeweils eine nach außen gewölbte, sich auf dem jeweils vorderen Etikett und den anderen Stationen abwälzende Aufnahmefläche für das Etikett aufweist, wobei als Antrieb für jedes Entnahmeelement ein Kurvengetriebe vorgesehen ist, das aus einer für alle Entnahmeelemente gemeinsamen, ortsfesten Doppelkurvenscheibe mit in zwei Ebenen übereinander und mit Abstand voneinander angeordneten einseitigen Kurven und aus zwei Sätzen von Eingriffsgliedern besteht, die auf der Antriebswelle oder einer mit ihr gekuppelten Lagerwelle mittels eines Trägerelementes gelagert sind und durch Formschluß mit den beiden Kurven bei Drehen des Trägers den Zwangslauf eines jeden Entnahmeelementes über seine volle Umdrehung sichern.

Um bei Etikettiermaschinen die Entnahmeelemente an den verschiedenen Stationen auf ihren gesamten Umlauf gleichsinnig mit unterschiedlicher Winkelgeschwindigkeit drehen zu können, sind verschiedene kurvengesteuerte Antriebe bekannt.

Bei einem ersten Antrieb (DT 24 36 003 P2) werden die Entnahmeelemente jeweils von einem Paar Hebelarme angetrieben, die jeweils mit einem Eingriffsglied in einer geschlossenen Nutkurve geführt sind. Die sich teilweise überschneidenden Nutkurven liegen zum Zwecke der eindeutigen Führung der Hebelarme in verschiedenen Ebenen. Aufgrund der Führung eines jeden Eingriffsgliedes an zwei Flanken der ihm zugeordneten Nutkurve ist jedes Eingriffsglied eindeutig geführt. Die Nutkurven sind so gestaltet, daß das eine Eingriffsglied drehmomentwirksam ist, wenn sich das andere Eingriffsglied in einer Totlage befindet. Ein solcher Antrieb hat sich jedoch in der Praxis nicht durchsetzen können.

Auch ein anderer Antrieb bei einer Etikettiermaschine der eingangs genannten Art (DE 27 09 521 A1) hat sich in der Praxis nicht durchsetzen können. Bei diesem Antrieb sind in zwei übereinander angeordneten Ebenen zwei Kurvenscheiben mit Außenkurven vorgesehen, denen jeweils ein Satz aus jeweils zwei Eingriffsgliedern zugeordnet ist. Die beiden Paare von Eingriffsgliedern sind auf der Ober- und Unterseite einer Scheibe um 90° gegeneinander versetzt gelagert. Die Scheibe wird von einer sich bis in die Ebene zwischen den Kurvenscheiben erstreckenden Lagerwelle getragen. Ob Vorkehrungen für eine kollisionsfreie Passage der Lagerwelle auch in den äußeren radialen Bereichen der ihr benachbarten Kurvenscheibe getroffen sind, läßt sich dem Stand der Technik nicht entnehmen.

Eine Etikettiermaschine der eingangs genannten Art mit einem anderen Antrieb hat sich dagegen in der Praxis bewährt (US-PS 42 98 422). Bei dieser Etikettiermaschine ist das Kurvengetriebe als Triebstockgetriebe ausgebildet, deren beide Triebstockverzahnungen an den Innenseiten der als Ringkörper ausgebildeten Doppelkurvenscheibe angeordnet sind. Das Trägerelement, das auf seinen beiden Seiten jeweils einen Satz der als Triebstöcke ausgebildeten Eingriffsglieder trägt, ist zwischen den beiden Triebstockverzahnungen auf dem Ende der bis hierhin reichenden Antriebswelle des Entnahmeelementes angeordnet. Damit eine kollisionsfreie Passage der Antriebswelle entlang der wellenseitigen Triebstockverzahnung möglich ist, sind die Spitzen der Zähne dieser Triebstockverzahnung abgeschnitten.

Mit einem solchen Antrieb läßt sich zwar eine ungleichförmige Eigenrotation der Entnahmeelemente erreichen, doch ist der Aufwand des Triebstockgetriebes recht hoch. Ein weiterer Nachteil besteht darin, daß der radiale Durchmesser der Triebstockverzahnungen wegen der Mindestbreite der einzelnen Zähne der Triebstockverzahnung eine Kompaktbauweise nicht ermöglicht.

Der Erfindung liegt die Aufgabe zugrunde, eine Etikettierstation der eingangs genannten Art mit einem einfacher gestalteten Antrieb zu schaffen, der darüber hinaus eine Kompaktbauweise ermöglicht.

Diese Aufgabe wird bei einer Etikettierstation der eingangs genannten Art dadurch gelöst, daß die Antriebs- bzw. Lagerwelle vor der Ebene, in der die dieser Welle näherliegende erste Kurve liegt, endet, und daß die Eingriffsglieder, die der anderen zweiten Kurve zugeordnet sind, an einem zwischen den beiden Kurven liegenden Brückenglied gelagert sind, das von am Trägerelement gehaltenen Distanzelementen getragen ist, die außerhalb des von der ersten Kurve überstrichenen Bereichs liegen. Besonders vorteilhaft ist es, wenn die ohnehin vorhandenen Eingriffsglieder die Distanzelemente umfassen.

Die erfindungsgemäße Etikettierstation kann in kompakter Bauweise und bei einfacher Gestaltung der Kurven ausgeführt werden, weil beide Kurven mit ihren Nocken bis in den Bereich der Antriebs- bzw. Lagerwelle der Eingriffsglieder reichen können. Die erfindungsgemäße Lehre geht über die Lehre des Hauptpatentes insofern hinaus, als die Distanzglieder nicht als Eingriffsglieder ausgebildet sein müssen. Wie beim Hauptpatent sind im Rahmen dieser allgemeineren Lehre die beim Hauptpatent beanspruchten Ausgestaltungen von Vorteil.

Im folgenden wird die Erfindung anhand einer ein Ausführungsbeispiel darstellenden Zeichnung näher erläutert. Im einzelnen zeigen

Fig. 1 eine Etikettierstation in schematischer Darstellung in Draufsicht,

Fig. 2 ein Kurvengetriebe für ein Entnahmeelement in schematischer Darstellung in Draufsicht,

Fig. 3 das Kurvengetriebe gemäß Figur 2 im Axialschnitt nach der Linie I-I der Figur 2 und

Fig. 4 die Etikettierstation gemäß Fig. 1 in schematischer teilweise abgewandelter und ergänzter Darstellung in Draufsicht.

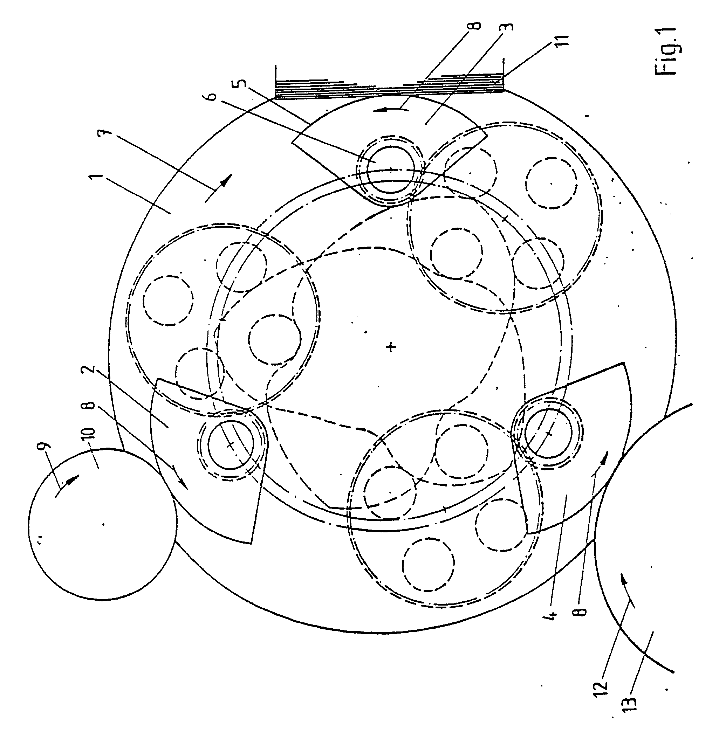

Die in Fig. 1 dargestellte Etikettierstation besteht aus einem tellerförmigen Träger 1, auf dem unter gleichen Winkeln drei Entnahmeelemente 2,3,4 angeordnet sind. Jedes Entnahmeelement 2,3,4 weist eine zylindrisch gekrümmte Aufnahmefläche 5 für ein Etikett auf und ist zwischen dieser und deren Krümmungsmittelpunkt mit einer Antriebswelle 6 im Träger 1 gelagert. Bei Drehung des Trägers 1 in Richtung des Pfeils 7 drehen sich zwangsläufig durch einen noch zu beschreibenden Antrieb die Entnahmeelemente 2,3,4 in Richtung des Pfeils 8, also gegensinnig zum Träger 1.

Bei dieser Drehung des Trägers 1 werden die Entnahmeelemente 2,3,4 an verschiedenen Stationen, und zwar einer in Richtung des Pfeils 9 rotierenden Leimwalze 10, einem feststehenden Etikettenkasten 11 mit einem darin befindlichen Etikettenstapel und einem in Richtung des Pfeils 12 rotierenden Greiferzylinder 13 unter Ausführung einer Abwälzbewegung an den einzelnen Stationen vorbeibewegt. Dabei wird zunächst die Aufnahmefläche 5 eines jeden Entnahmeelementes 2 durch die Leimwalze 10 beleimt. Beim Abwälzen an dem vorderen Etikett des im Etikettenkasten 11 befindlichen Etikettenstapels wird das vordere Etikett infolge der Haftwirkung des Leims an der Aufnahmefläche 5 dem Etikettenstapel entnommen und bei weiterer Drehung des Trägers dem Greiferzylinder 13 zugeführt, der es von der Aufnahmefläche 5 abnimmt und auf hier nicht dargestellte, an ihm vorbeibewegte Gegenstände, wie Flaschen, überträgt.

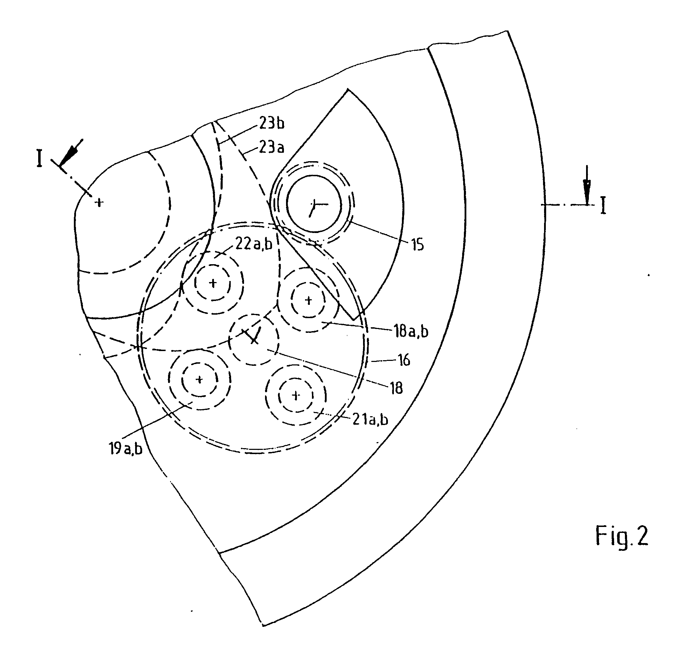

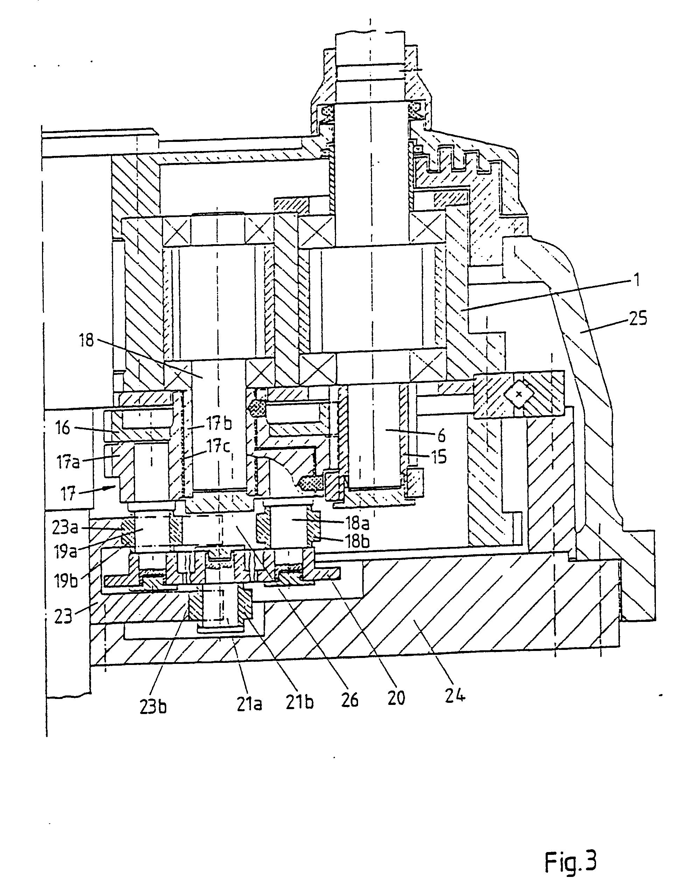

Damit an den verschieden gestalteten Stationen 10,11,12 die Aufnahmefläche 5 sich abwälzen kann, ist es erforderlich, daß die Eigenrotation eines jeden Entnahmeelementes 2 in Richtung des Pfeils 8 beschleunigt und verzögert wird. Für diesen Zweck ist der im einzelnen in Figur 2 und 3 dargestellte Antrieb vorgesehen.

Die im Träger 1 gelagerte Antriebswelle 6 trägt an ihrem unterhalb des tellerförmigen Trägers 1 angeordneten Ende ein Zahnrad 15, das mit einem größeren Zahnrad 16 kämmt. Da größere Zahnrad 16 ist Teil eines Trägerelementes 17, das auf dem unteren Ende einer im Träger 1 gelagerten Lagerwelle 18 sitzt. Das Trägerelement 17 besteht aus einem äußeren Körper 17a und einem inneren Körper 17b. Die beiden Körper 17a,17b weisen radial gerichtete Klauen auf, die ineinandergreifen und zwischen denen vollflächig eine dünne elastische Einlage 17c aus Dämpfungsmaterial angeordnet ist.

Das Zahnrad 16 ist starr mit dem äußeren Körper 17a verbunden, an dessen Unterseite zwei diametral gegenüberliegende, Distanzelemente bildende Eingriffsglieder aus einem Lagerzapfen 18a,19a und einer darauf drehbar gelagerten Rolle 18b,19b befestigt sind. Wegen der elastischen Zwischenlage 17c zwischen dem äußeren Körper 17a und dem inneren Körper 17b ergibt sich somit für das Zahnrad 16 und die Eingriffsglieder eine Entkopplung.

Die Lagerzapfen 18a,19a tragen an ihrer Unterseite ein Brückenglied 20 in Form eines Ringes, an dessen unterer Seite zwei diametral gegenüberliegende und um 90° zu den Eingriffsgliedern 18a,18b,19a,19b versetzte Eingriffsglieder, die ebenfalls aus einem Lagerzapfen 21a, 22a und darauf angeordneter Rolle 22b bestehen, befestigt sind.

Den beiden Sätzen von Eingriffsgliedern 18a,18b,19a,19b, 21a, 21b, 22a, ist eine Doppelkurvenscheibe 23 mit zwei äußeren Kurven 23a,23b zugeordnet. Diese Doppelkurvenscheibe 23 ist über eine Trägerbrücke 24 mit dem Maschinengestell 25 der Etikettierstation starr verbunden.

Wie in Fig. 2 dargestellt und in Fig. 3 strichpunktiert angedeutet ist, liegen die Außenkurven 23a,23b in Teilabschnitten im Bereich der Achse der Lagerwelle 18. Da aber durch die Konstruktion mit dem Brückenglied 20 im Bereich der Außenkurve 23a in der Mitte zwischen den Eingriffsgliedern 18a bis 19b ein wellenfreier Raum 26 geschaffen worden ist und im Bereich der unteren Außenkurve 23b die Antriebs- oder Lagerwelle 18 ohnehin nicht durchgezogen zu werden brauchte, können die Kurven 23a,23b über ihre gesamte Länge optimal gestaltet und der gesamte Antrieb mit geringem Aufwand an Bauelementen kompakt gestaltet werden.

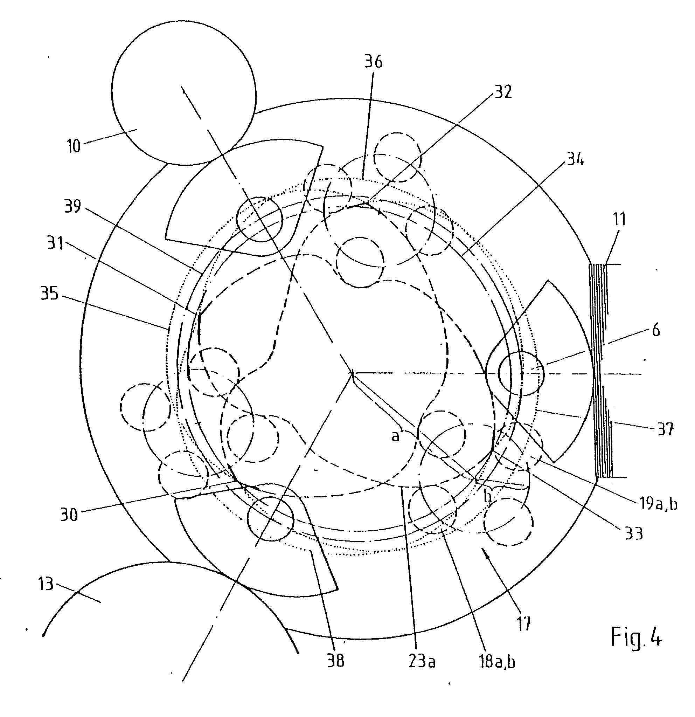

Wie Fig. 4 zeigt, ergibt sich aus der Anordnung der drei Stationen, und zwar der Leimwalze 9, dem Etikettenkasten 11 und dem Greiferzylinder 13 eine Aufteilung des Trägers 1 in drei Sektoren. In der Zeichnung werden diese Sektoren durch die durch die Mitte der Stationen 9,11,13 gehenden strichpunktierten Linien begrenzt. In dem Sektor zwischen der Leimwalze 10 und dem Greiferzylinder 13 liegen zwei Extrempunkte 30,31 der ausgebildeten Außenkurven 23a,23b, während in den Sektoren zwischen der Leimwalze 10 und dem Etikettenkasten 11 einerseits und dem Etikettenkasten 11 und dem Greiferzylinder 13 andererseits jeweils ein Extrempunkt 32,33 der Außenkurven 23a.23b liegen.

Mindestens einer dieser Extrempunkte, im Ausführungsbeispiel der Extrempunkt 32, liegt außerhalb der Mittelpunktsbahn 34 des Trägerelementes 17. Die tragenden Teile der Außenkurven 23a,23b für jedes Eingriffsgliederpaar sind in der Zeichnung gestrichelt dargestellt, während die nichttragenden und deshalb auch nicht ausgebildeten Kurven, die sich an diese ausgebildeten Kurven 23a,23b anschließen, punktiert dargestellt sind. Diese Kurven 35,36,37 liegen zum größeren Teil außerhalb der Mittelpunktsbahn 39 der Achse der Antriebswelle 6 des Entnahmeelementes.

Das Verhältnis des Radius a der Mittelpunktsbahn 39 des Trägerelementes 17 zum Radius b des Laufkreises der Eingriffsglieder auf dem Trägerelement 17 beträgt vorzugsweise 3 zu 1.

Bei einem zwischen der Antriebswelle und dem Trägerelement angeordneten Übersetzungsgetriebe mit einem Übersetzungsverhältnis von vorzugsweise 1 zu 3 und bei außerhalb der Mittelpunktsbahn 34 des Trägerelementes 17 angeordneter Achse der Antriebswelle 6 des Entnahmeelementes sowie bei mittiger Stellung des Entnahmeelementes vor dem Etikettenkasten 11 stehen ein Eingriffsgliederpaar 18a,18b,19a,19b mit beiden Eingriffsgliedern 18a,18b,19a,19b im Eingriff mit der Kurve 23a.

## Ansprüche

1. Etikettierstation für Gegenstände, insbesondere Flaschen, mit mehreren längs einer Bahn hintereinander angeordneten Stationen, und zwar einer Beleimungsvorrichtung, einer Etikettenvorratsstation und einer Etikettenübertragungsstation, sowie mit mindestens einem auf einem sich drehenden Träger drehbar gelagerten und bei jeder Umdrehung des Trägers an den Stationen vorbeibewegten Entnahmeelement für die Etiketten, das jeweils eine nach außen gewölbte, sich auf dem jeweils vorderen Etikett und den anderen Stationen abwälzende Aufnahmefläche für das Etikett aufweist, wobei als Antrieb für jedes Entnahmeelement ein Kurvengetriebe vorgesehen ist, das aus einer für alle Entnahmeelemente gemeinsamen, ortsfesten Doppelkurvenscheibe mit in zwei Ebenen übereinander und mit Abstand voneinander angeordneten einseitigen Kurven und aus zwei Sätzen von Eingriffsgliedern besteht, die auf der Antriebswelle oder einer mit ihr gekuppelten Lagerwelle mittels eines Trägerelementes gelagert sind und durch Formschluß mit den beiden Kurven bei Drehung des Trägers den Zwanglauf eines jeden Entnahmeelements über seine volle Umdrehung sichern,

**dadurch gekennzeichnet,** daß die Antriebs- bzw. Lagerwelle (18) vor der Ebene, in der die dieser Welle (18) näherliegende erste Kurve (23a) liegt, endet, und daß die Eingriffsglieder (21a,21b,22a,22b) die der anderen zweiten Kurve (23b) zugeordnet sind, an einem zwischen den beiden Kurven (23a,23b) liegenden Brückenglied (20) gelagert sind, das von am Trägerelement (17) gehaltenen Distanzelementen (18a,19a) getragen ist, die außerhalb des von der ersten Kurve (23a) überstrichenen Bereichs (26) liegen.

Fig.1

Fig.2

Fig.3

EP 0 387 553 A1

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | FR-A-2 344 763 (BAELE-GANGLOFF) · <br> * Figuren 1-4,6; Seite 4, Zeilen 2-15; Seite 4, Zeile 36 - Seite 6, Zeile 2; Seite 6, Zeilen 17-33 * & DE-A-2 709 521 <br><br> --- | 1 | B 65 C 9/16 <br> F 16 H 35/02 |
| D,A | FR-A-2 279 623 (JAGENBERG WERKE) & DE-A-2 436 003 <br> --- | | |
| P,X | EP-A-0 337 131 (ETI-TEC MASCHINENBAU) <br> * Dokument im Ganze * <br> ----- | 1 | |

**RECHERCHIERTE SACHGEBIETE (Int. Cl.5)**

B 65 C
F 16 H

Der vorliegende Recherchenbericht wurde für alle Patentansprüche erstellt

| Recherchenort | Abschlußdatum der Recherche | Prüfer |
|---|---|---|
| DEN HAAG | 04-04-1990 | DEUTSCH J.P.M. |